# EUROPÄISCHE PATENTSCHRIFT

(11) **EP 0 964 967 B1**
(45) Veröffentlichungstag und Bekanntmachung des Hinweises auf die Patenterteilung: **11.07.2001**
(21) Anmeldenummer: 97950024.6
(22) Anmeldetag: 24.10.1997
(51) Int. Cl.: E04D 3/35, F24J 2/04

(54) **DACHELEMENT**
ROOF ELEMENT
ELEMENT DE TOITURE

(30) Priorität: 24.10.1996 DE 19644284
(43) Veröffentlichungstag der Anmeldung: 22.12.1999
(73) Patentinhaber: UTI Holding + Management AG, 60487 Frankfurt am Main (DE)
(72) Erfinder: LÜTZE, Günter, W., D-16548 Glienicke (DE)
(86) Internationale Anmeldenummer: EP9705881
(87) Internationale Veröffentlichungsnummer: WO9817880

(56) Entgegenhaltungen:
- EP-A- 0 126 726
- FR-A- 2 473 690

## Beschreibung

Die Erfindung betrifft ein Dachelement nach dem Oberbegriff des Anspruches 1 umfassend einen hohlen plattenförmigen Dachkörper, der eine einstückige Stützwanne und wenigstens ein darauf bzw. aus der Wanne vorstehende Stege aus dem Wannenmaterial lösbar ruhendes Abdeckelement aufweist, und wenigstens eine Kollektoreinrichtung für Sonnenenergie, wobei das Abdeckelement zumindest außenseitig zur Anpassung an konventionelle Dachflächen profiliert ist.

Die DE-Zeitschrift Solarführer Ulm", Ausgabe 1995, S. 11-16 zeigt ein Dachelement mit einem flachen Sonnenkollektor, der fertig montiert auf eine bestehende schräge Dachneigung mit einer Dachdeckung aufgesetzt wird. Ein solches Dachelement wird als einzelnes Bauelement bis zu einer Größe von maximal 12 m² hergestellt. Größere Flächen werden durch Zusammenschaltung mehrerer Elemente realisiert, wodurch aber auf der Dachneigung ein großer Randbereich entsteht. Ein großer Randbereich auf einer Solarfläche führt jedoch zu einer größeren Auskühlung. Das Dachelement mit integrierter Kollektoreinrichtung hebt sich von einer konventionellen Dachabdeckung ab.

Der DE-Prospekt "Solarfuchs" der Fa. Johann Kalkgruber in A-4400 Steier beschreibt ein Dachelement mit ebenfalls integrierter Kollektoreinrichtung für Sonnenenergie, das auf eine herkömmliches schräges Dach mit einer Dachdeckung aufmontiert wird und ebenso auf dieser aufliegt. Die Anordnung besitzt ein witterungsfestes und vorgespanntes Abdeckelement aus ca. 4 mm dickem Glas und unterscheidet sich deutlich von einer herkömmlichen Dachabdeckung.

DE-U-9208387 zeigt ein Dachelement, welches auf einer Unterdachkonstruktion aufliegt, einen Dachkörper mit einer Stützwanne und Abdeckelemente besitzt, die auf Stegen angeordnet die gesamte Anordnung abdecken. Die Abdeckelemente bestehen aus einer Vielzahl von übliche Dachziegeln. In einem Überlappungsbereich zwischen benachbarten und /oder übereinander angeordneten Dachziegeln ist eine Solarzelleneinrichtung vorgesehen, mit der Sonnenenergie in elektrischen Strom umgewandelt werden kann.

DE-A-2807487 zeigt ein Dachelement das lediglich aus Dachziegeln besteht. Diese Anordnung besitzt aneinandergefügte Dachziegeln, die auf einer Dachauflage aufliegen. Jeder Dachziegel besitzt in seinem Inneren einen Hohlraum, in dem eine Kollektoreinrichtung für Sonnenenergie angeordnet ist (Dachziegelkollektor). Diese hohlen Dachziegeln werden auf die Dachauflage aufgelegt. Außenseitig erfolgt eine Anpassung an konventionelle Dachflächen. Das Dachelement besitzt jedoch mehrere Abdeckelemente, die wiederum einen großen Randbereich besitzen, der für eine große Auskühlung und damit zu einem geringen Wärmewirkungsgrad des Dachelementes führt.

Die DE-A-3000289 beschreibt ein Dachelement, das aus einem gegossenem Material besteht, in dessen Innenraum eine eine Kollektoreinrichtung bildende Röhrenanordnung eingegossen ist. Das Dachelement ist ein kompakter Körper, dessen nach außen weisende Oberfläche in Anpassung an konventionelle Dachflächen eingefärbt und profiliert ist. Ein Dachkörper mit einer Stützwanne und Stegen, auf denen ein Abdeckelement angeordnet ist, und Abdeckelemente, die das Dachelement abdecken sind nicht vorhanden. Auch diese Anordnung hat wegen der kompakten Baumasse des Dachelementes einen niedrigen Wärmewirkungsgrad.

Die DE-U-29506798 zeigt ein Dachelement mit einem Dachkörper und einer in diesem integrierten Kollektoreinrichtung für die Sonnenenergie. Das Dachelement ist zwischen zwei Dachsparren angeordnet Als Abdeckelement ist eine Glasplatte vorgesehen, die innerhalb der Dachsparren eingefaßt ist und nicht entfernbar ist.

DE-A-3124992 zeigt ein Dachelement mit vorgefertigten Dachkörpern, denen eine Kollektoreinrichtung für Solarenergie zugeordnet ist. Diese Einrichtung ist dadurch gekennzeichnet, daß die Dachkörper als selbsttragenden, Rippenbetonplatten ausgebildet sind, und mit ihren Rippen nach außen zu liegen kommen. In Vertiefungen zwischen den Rippen ist die Kollektoreinrichtung angeordnet. Eine sonnendurchlässige Abdeckeinrichtung deckt die Vertiefung ab. Die der Sonne zugewandte Seite ist glatt und entspricht in ihrer Oberflächenstruktur einer üblichen Glasabdeckung.

FR-A-24 73 690 zeigt ein Dachelement mit einer in einem Hohlraum montierten Sonnenkollektoreinrichtung gemäß dem Oberbegriff des Anspruches 1. Ein Dachkörper oder eine Seite umfaßt wie üblich mehrere solcher Dachelemente.

Sehr oft lehnen Architekten oder Genehmigungsbehörden die Errichtung von Dächern mit Dachelementen bzw. deren Nachrüstung mit Solarkollektoren ab, da sie gestalterisch oder ästhetisch nicht den Anforderungen einer ortsüblichen oder regionalen Dachabdeckung entsprechen. Die Montagekosten solcher mit Solarkollektoren bestückter Dachelemente sind durch eine nachträgliche Montage auf ein bestehendes Dach hoch. Außerdem sind solche nachträglich eingebauten Anlagen sehr störanfällig.

Aufgabe der Erfindung ist es, ein Dachelement als Solardach entsprechend dem Oberbegriff des Anspruches 1 anzugeben, das im Aussehen, Gewicht und Abmessung sich von konventionellen Dachelementen nicht unterscheidet und kostengünstig montiert werden kann.

Diese Aufgabe wird erfindungsgemäß durch die kennzeichnenden Merkmale des Anspruches 1 gelöst, ist.

Das erfindungsgemäße Abdeckelement gleicht optisch den meisten regional verschiedenen Dachstrukturen, so daß ohne Beeinträchtigung der Ästhetik ein Dach bestehend aus den erfindungsgemäßen Dachelementen den üblichen Dächern gleicht. Der Oberfläche eines Abdeckelementes werden optisch auffallende Strukturen durch entsprechende, gezielte Beimischungen von Farbstoffen oder gefärbten Fasern bei der Herstellung beigefügt. Diese erfolgt entweder einschichtig mit einer aufgesetzten Struktur oder aber auch zweischichtig durch Aufkanten oder Tiefziehen der Struktur auf einer oberen und /oder unteren Schicht des Abdeckelementes. Die Struktur kann aber auch dadurch erreicht werden, daß die zu strukturierende Schicht lediglich an einigen Stellen an das Element punktgeschweißt wird und unter Druck die zu strukturierende Schicht gegen eine Form gepreßt wird.

Das erfinderische Dachelement erstreckt sich auf die Größe eines kompletten Daches. Auf zwischenliegende Randauskühlungen zwischen den einzelnen Elementen kann somit verzichtet werden. Dies reduziert Montagekosten und spart die Kosten für Verbindungselemente. Solche großflächigen Dachelemente mit voller Dachfunktion können ferner industriell hergestellt werden und ermöglichen es, großflächige und leistungsstarke Kollektoren und Elemente mit wesentlich höherer oder differenzierter Leistung, wie bei den üblichen Kollektoren oder Elementen, bei reduzierten Kosten einzusetzen und so die laufenden Energiekosten eines Hauses genauso zu senken, wie insbesondere die Erstausstattungskosten bezogen auf die vergleichbaren Leistungsangebote. Eventuell geringfügig höhere Transportkosten solcher großen Solarelemente, die jedoch nur bei Großstrecken ins Gewicht fallen können, werden durch die Vorteile kompensiert, die durch die höhere Energieausbeutung gegeben sind. Diese Vollflächennutzung des ganzen Daches als Solardach kompensiert weiter den auf die Fläche etwas geringeren Wirkungsgrad dieses Dächelementes gegenüber dem eines üblichen Elementes.

Es ist vorteilhaft, wenn die Stützwanne von einem einzigen Abdeckelement verschlossen wird.

Ein solches großflächiges Element hat vorzugsweise eine Oberfläche mit einer Abmessung von mindestens 16 m² oder eine Kantenlänge von mindestens 4 m. so daß insgesamt sogar eine auf die gesamte Dachfläche gesehen höhere Gesamtnutzung möglich ist.

Es ist vorteilhaft, wenn das Abdeckelement aus einem witterungsfesten Glas bzw. aus einem lichtdurchlässigen Kunststoff- oder Keramikmaterial besteht. Entscheidend ist, daß das Material des Abdeckelementes den Anforderungen einer üblichen Dachabdeckung sowohl in Bezug auf Witterungsfestigkeit, Härte, Dichte oder ähnlichen mechanischen Eigenschaften entspricht, ohne jedoch die Lichtdurchlässigkeit oder Wärmedurchlässigkeit zu verringern. Diese Abdeckeiemente müssen, wenn sie aus Glas sind, hitzebeständig sein und auch einer bestimmten Witterungsanforderung entsprechen oder auch thermoelastisch sein. Diese mechanischen oder thermischen Eigenschaften bestimmen im wesentlichen die Auswahl des Materials des Abdeckelementes.

Die außenseitige Profilierung der Abdeckelemente ist vorteilhaft so angeordnet, daß es eine dachziegel-, schieferdach- oder schindeldachförmige Struktur aufweist. Solche Dachanordnungen sind in vielen Gegenden ortsüblich und konventionell. Es ist selbstverständlich, daß bei anders strukturierten Dacheindeckungen in anderen Ländern oder anderen Gegenden andere Strukturen möglich sind.

An der der Außenseite zugewandten Oberfläche des Abdeckelementes können vorteilhaft zusätzliche Photovoltaikelemente zur direkten Umwandlung von Sonnenenergie in elektrischen Strom angeordnet sein. Solche Photovoltaikelemente sind flache, flächenartig ausgebreitete Module, die auf dem Abdeckelement aufgebracht, meist aufgeklebt oder eingegossen werden. Mehrere solcher Module werden dann parallel zusammen geschaltet und als Solarstrom einer Nutzung zugeführt. Aufgrund der erfindungsgemäßen Struktur des Abdeckelementes besitzen die einzelnen Module jeweils eine Fläche, die der eines "Dachziegels" entspricht.

Es ist weiter vorteilhaft, wenn eine untere Längsseite des Dachkörpers eine Dachrinne für Regenwasser, bzw. eine Auffangvorrichtung für Schnee umfaßt, dessen senkrecht dazu angeordneten Seiten ein Dachsims bilden und dessen obere Längsseite einen Dachfirst bildet. Dies bedeutet, daß das Dachelement zu einem kompletten Dach mit Dachaufbauten wie eine Firstgaube, Fenster, Kamine, Dachbalkone, Dachterrassen, Dachreiter und Dachgauben ausbaubar ist. Ein solche Anordnung ist dann vorteilhaft als Ganzes von einer Auflage abnehmbar, wird anschließend transportiert und auf eine entfernte andere Dachauflage aufgesetzt. Dachauflagen sind beispielsweise die Oberkanten von Außenwänden eines Hauses, Gebäudes oder von anderen Gebilden, die eine Dachkonstruktion in Form einer Flach-, Giebel- oder anderen Konstruktion besitzen. Durch die Transportierbarkeit der Anordnung wird die oben beschriebene industrielle Herstellung eines Dachelementes noch verbessert mit all den Vorteilen, die eine solche Herstellungsweise üblicherweise mit sich bringt. Ein einzelnes Dachelement wird beispielsweise auf einer speziellen Vorrichtung als eine Dachhälfte hergestellt und zu einem kompletten Dach zusammengefügt. Anschließend wird das komplette Dach die mit Hilfe von Hebezeugen oder von anderen Transportmitteln auf einer Auflage aufgesetzt, beispielsweise auf ein ebenfalls industriell hergestelltes Fertighaus. Damit ein solches Dach auch gegenüber unterschiedlichen Auflagen vorteilhaft anwendbar ist, ist es vorteilhaft, wenn das Dach einen zwischen 0 und 80° verstellbaren Neigungswinkel besitzt. In jedem Fall kann die für einen Transport notwendige Aufhängung oder für die Verbindung mit einem Gebäude oder Fundamenten notwendige Verankerung oder Anschlußvorrichtung bereits beim Herstellungsvorgang in die Dachkonstruktion mit angebracht bzw. in diese eingegossen werden.

Das Wannenmaterial besteht vorteilhaft aus einem mineralischen Werkstoff, wobei Leichtbeton bevorzugt wird. Dieses Material ist leicht und ermöglicht gleichzeitig eine entsprechende Stabilität der Abstützwanne. Eine besonders vorteilhafte Ausführungsform der Stützwanne ist zum Beispiel eine Leichtbetonwabenkonstruktion, bei der Waben in Verbindung mit einer glasfaser- oder mineralfaser-, kohlenstoffaser- oder karbon- oder graphitfaserverstärkten Leichtbetonschicht die Stützfunktionfunktion übernehmen. Bei dem zum Beispiel aus Polypropylen oder einem anderen Kunststoff bestehenden Kern des Wabenmaterials kann eine gleiche Beimischung und eine Befüllung des Kunststoffes mit Holzmehl oder Perlite und ähnlichem erfolgen, was auch zur Gewichts- und Kostenreduzierung beiträgt.

Die Stützwanne für das Dachelement ist vorteilhaft jeweils zwischen zwei Dachbalken eines Daches angeordnet, die senkrecht und/oder parallel zu den Längsseiten der Dachelemente verlaufen und die Stege für das Dachabdekkeiement bilden. Die Stützwanne des erfindungsgemäßen Dachelementes kann damit in einen festen Rahmen integriert und größtenteils in diesen versenkt werden, der durch die Dachbalken oder durch eine ähnliche seitliche Abgrenzung bei einem einzigen Dachelement gebildet wird. Damit wird die Stützwanne in sich selber stabil gelagert und gegen Verwindungen von außen geschützt. Die Dachbalkenanordnung bildet damit auch die Stege, auf denen das Abdeckelement befestigt werden kann. Damit wird das Dachelement kompletter Bestandteil einer herkömmlichen Dachkonstruktion.

Die Kollektoreinrichtung für Sonnenenergie umfaßt vorteilhaft einen Reflektor, eine Absorbereinrichtung, ein durch die Sonnenenergie erwärmtes Fluid und Wärmeabführungseinrichtungen, wobei die Wärme des Fluid über an Seitenrändern des Dachelementes angeordneten Zu- und Ableitungen nutzbar gemacht wird. Das Fluid kann vorteilhaft alternativ eine Flüssigkeit oder Luft sein, die jeweils über Übertragungsmedien der Wärmeabführungseinrichtung zugeführt werden können. Als Übertragungsmedium kann beispielsweise ein Rohr verwendet werden, das mit oder ohne Absorber schlangenförmig, segmentweise verlegt oder gittermäßig als Register im Ganzen über ein ganzes Dachelement mit einer unteren und oberen Zuführung und einer unteren und oberen Ableitung für das wärmeführende Fluid versehen wird.

Die Kollektoreinrichtung für Sonnenenergie ist vorteilhaft in einem von einer Innenseite der Stützwanne, einer Unterseite des Abdeckelementes und von den seitlichen Stegen begrenzten Hohlraum angeordnet. Die Kollektoreinrichtung ist damit in einer Kammeranordnung integriert, die durch die lösbare und entfernbare Abdeckplatte abgedeckt wird. Eine solche Kammer wird vorteilhaft zunächst ohne Abdeckelement gefertigt und in eine bestehende Dachkonstruktion eingebaut. Nach dem Einbau wird die Kammer durch das nach außen strukturierte Abdeckelement wie eine Platte abdeckt. Bei einer späteren Wartung oder einem Ausbau von Teilen des Dachelementes wird die Abdeckplatte lediglich entfernt, so daß die einzelnen Teile ohne großen Aufwand leicht zugänglich sind und ggf. leicht ausgetauscht werden können. Zur besseren Integration der Kollektoreinrichtung in der Kammeranordnung ist es vorteilhaft, die Innenseite der Stützwanne wellenförmig zu strukturieren und deren Oberfläche mit reflektierendem Material zu versehen. Die Erhebung der Oberfläche zu einem Wellenberg bildet in vorteilhafter Weise dann den aus der Wanne vorstehenden Steg und damit eine Auflage für das Abdeckelement. Ein so gebildetes Wellental wird vorteilhaft mit einem reflektierendem Material beschichtet und dient zur Aufnahme der kompletten Kollektoreinrichtung. Es ist weiter vorteilhaft, wenn das Wellental die Krümmung eines Hohlspiegels besitzt dessen Brennpunkt, flächenförmig längs der Oberfläche verlängert, die Absorbereinrichtungen mit der Wärmeabführungseinrichtung aufweist. Das Rohr mit einem wärmeführenden Fluid verläuft dann entlang dieses Brennpunktes, an das zusätzlich ein nach oben oder nach unten oder nach beiden Seiten weisendes Absorberblech vorzugsweise aus Schwarzchrom beschichtetem Kupfer angebracht werden kann. Die wellenförmigen Vertiefungen im unteren und oberen Bereich des Dachelementes können vorteilhaft gleich oder ähnlich geformte, auch geteilte Verbindungskanäle für die unteren und oberen Abführungen und Ableitungen und Zuleitungen aufweisen. Diese können je nach Anforderung vorteilhaft entweder parallel oder senkrecht zu den unteren oder oberen Seitenrändern des Dachelementes verlaufen.

Die wellenförmig oder hohlspiegelartig verformten Vertiefungen der Innenseite der Stützwanne bilden Kanäle. Diese können zusätzlich vorteilhaft zur Luftzirkulation (Warm- oder Kaltluft) mit oder ohne Filtersystem und/oder zum Einbau von Vakuumröhrenkollektoren mit trockener Anbindung an die Wärmeträgerflüssigkeit verwendet werden.

Weitere vorteilhafte Weiterbildungen der Erfindung sind den Unteransprüchen sowie der nachfolgenden Beschreibung zu entnehmen:

Die Erfindung wird nachstehend unter Bezugnahme auf die anliegenden Zeichnungen anhand von zwei Ausführungsbeispielen näher erläutert.

Fig. 1 zeigt ein großflächiges Dachelement in perspektivischer Darstellung.

Fig. 2 zeigt eine erste Ausführungsform der Erfindung in einer Draufsicht.

Fig. 3 zeigt eine zweite Ausführungsform der Erfindung in einer Draufsicht.

Fig. 4 zeigt das erfindungsgemäße Dachelement nach Figur 1 in einer Vergrößerung X und in teilweiser Schnittdarstellung.

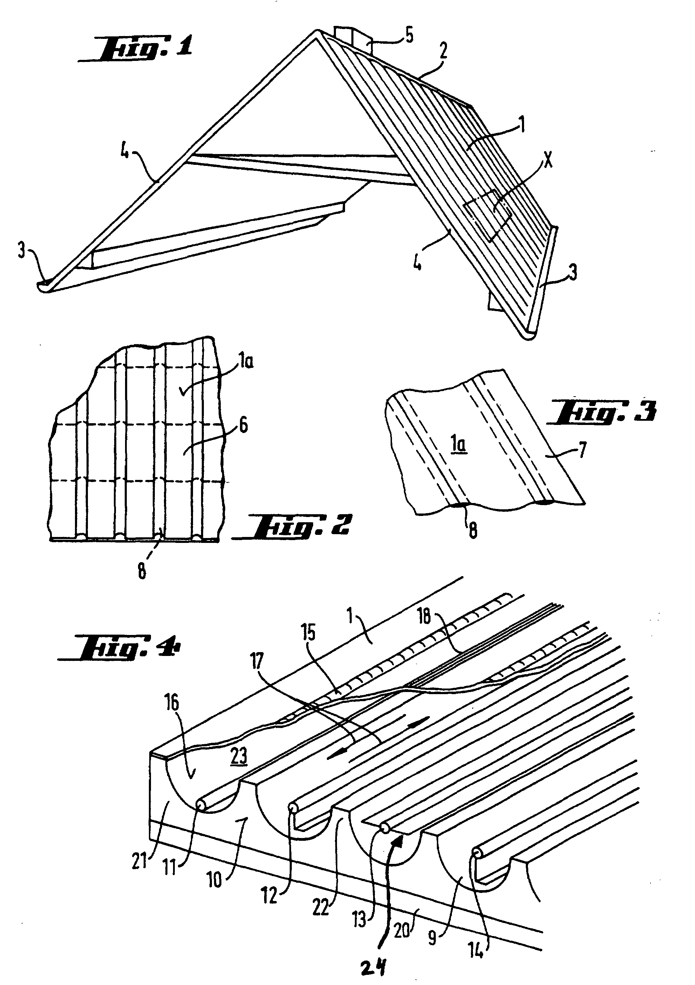

Figur 1 zeigt ein großflächiges Dachelement mit einer giebellangen Glas- oder Kunststoffabdeckung 1. Das Dachelement ist Bestandteil eines fertigen, insgesamt transportablen Giebeldaches, an das bereits eine Dachgaube 2 als Firstabschluß und eine Dachrinne 3 sowie ein Dachgesims 4 angeformt sind. Das Dachelement 1 zeigt ferner einen Kamin 5. Das komplette Gebilde bildet eine Auflage für ein nicht dargestelltes transportables Fertighaus oder Gebäude, welches entweder aus Fertigbauteilen zusammen montiert ist oder komplett als Ganzes in einer Fertigungshalle oder Fabrik gefertigt wird und zu einem Aufstellort transportiert wird. Auf eine solche Auflage wird dann die aus den erfindungsgemäßen Dachelementen bestehende Dachkonstruktion aufgesetzt.

Figur 2 zeigt in einer Draufsicht einen Ausschnitt einer ersten Ausführungsform des erfindungsgemäßen Dachelementes. Dargestellt ist ein Ausschnitt aus der Dachabdeckung nach Figur 1, wobei die nach außen weisende Oberfläche 1a der Abdeckung 1 eine Flachziegelstruktur 6 aufweist, d.h. die Oberfläche 1a ist äußerlich so strukturiert wie eine Dachabdeckung mit Flachziegeln. Die Abdeckung 1 besteht aus einer lichtdurchlässigen Glas- oder einer Kunststoffplatte. Zum besseren Licht-oder Wärmedurchgang durch die Abdekkung 1 sind in dieser Streifen längs oder parallel angeformt, die eine Reflexion der auf die Oberfläche 1a eintfallende Sonnenwärme verhindern. Diese Streifen 8 erstrecken sich über die gesamte Oberfläche 1a und haben die Struktur einer Sammel- oder Zerstreuungslinse, abhängig von der Funktion, die mit dieser Linsenanordnung erreicht werden soll.

Figur 3 zeigt eine zweite Ausführungsform der Erfindung, wobei das Dach anstelle der flachziegelförmigen Struktur 6 aus Fig. 2 eine Welldachstruktur 7 besitzt. Die Oberfläche 1 a von Fig. 3 zeigt ferner eine ähnlichen Sammel- und Zerstreuungslinsenstruktur 8 wie in Fig. 2 schon beschrieben.

Fig. 4 zeigt das erfindungsgemäße Dachelement in einer Vergrößerung X und in einer teilweisen Schnittdarstellung. Das Dachelement umfaßt einen hohlplattenförmigen Dachkörper 20, der eine einstöckige Stützwanne 21 aufweist und mit aus der Wanne hervorstehenden Stegen 22, auf denen das Abdeckelement 1 aufliegt. Die Stege 22 und die Stützwanne 21 sind aus Leichtbetonelementen 10 hergestellt. Die Innenseite der Stützwanne 21, die Stege 22 und das Abdeckelement 1 bilden eine Kammer 23, in der eine Kollektoreinrichtung 24 zur Nutzung der Solarwärme angeordnet ist. Die gesamte Wanne 21 ist zwischen nicht dargestellten Dachbalken angeordnet, wodurch das Dachelement 1 ein fester und integraler Bestandteil einer Dachkonstruktion ist, wobei die Innenseite der Stützwanne 21 hohspiegelartig geformte Vertiefungen 9 oder Kanäle aufweist, die als Reflektor 16 dienen, mit der Solarwärme über solarwärmeführende Rohre 11, 12, 13 in verschieden dargestellten Absorbereinrichtungen 12, 13, 14 oder auch direkt im Brennpunkt 11 einer Lichtbündelung oder Lichtstreuung aus einem Sammel- und Streuungslinsenstreifen 15 geführt wird, die in Abdeckelementen 1 längs der Kanäle 9 angeordnet sind. Die Absorberanordnung kann als einfaches Rohr, wie das Bezugszeichen 11 zeigt, mit einem angeflanschten Absorberblech 12 oder als beidseitig an dem Rohr 11 angeflanschtes Absorberblech 13 ausgeführt werden. Die Kanäle 9 sind parallel zu dem Dachgesims 4 der Fig. 1 (von oben nach unten oder umgekehrt) dargestellt. Andere Ausführungsarten des Kanals 9 senkrecht zu dem Dachgesims oder die Ausführung des Kanals 9 als Rinne oder in Kastenform sind ebenso möglich. Zusätzlich zur Führung des Absorberrohres 11, 12, 13, 14 dienen die Kanäle 9 als Kammer für eine Luftzirkulation 17. Die durch die Solarwärme erwärmte Zirkulationsluft wird mit Hilfe eines nicht dargestellten weiteren Kollektors trocken gesammelt und kann ebenfalls verwendet werden. Die Kammer 23 wird durch ein Abdeckelement 1 abgedeckt. Dieses Abdeckelement 1 ist witterungsfest und besitzt eine nach außen strukturierte Oberfläche.

## Patentansprüche

1. Dachelement, umfassend
einen hohlen plattenförmigen Dachkörper (20), der eine einstückige Stützwanne (21 ) und wenigstens ein darauf bzw. auf aus der Wanne vorstehende Stege (22) aus dem Wannenmaterial lösbar ruhendes Abdeckelement aufweist, und
wenigstens eine Kollektoreinrichtung (24) für Sonnenenergie, wobei das Abdeckelement (1) zumindest außenseitig zur Anpassung an konventionelle Dachflächen profiliert ist,
dadurch gekennzeichnet, daß das Abdeckelement (1) eingefärbt ist und der Dachkörper (20) jeweils eine ganze Seite eines Giebeldaches umfaßt.

2. Dachelement nach Anspruch 1, dadurch gekennzeichnet, daß die Stützwanne (21) von einem einzigen Abdeckelement (1) verschlossen wird.

3. Dachelement nach Anspruch 2, dadurch gekennzeichnet, daß das Abdeckelement (1) rechteckförmig ist und eine Oberfläche (1a) von mindestens 16 m² umfaßt bzw. eine Kantenlänge von mindestens 4 m aufweist.

4. Dachelement nach einem der Ansprüche 1 bis 3, dadurch gekennzeichnet, daß das Abdeckelement (1) aus einem witterungsfestem Glas bzw. einem lichtdurchlässigen Kunststoff- oder Keramikmaterial besteht.

5. Dachelement nach einem der Ansprüche 1 bis 4, dadurch gekennzeichnet, daß das Abdeckelement (1) außenseitig so profiliert ist, daß es eine dachziegel-, schieferdach- oder schindeldachförmige Struktur (6, 7) aufweist.

6. Dachelement nach einem der Ansprüche 1 bis 5, dadurch gekennzeichnet, daß einer außenseitig zugewandte Oberfläche (1a) des Abdeckelementes (1a) Photovoltaikelemente (18) zur direkten Umwandlung von Sonnenenergie in elektrischen Strom zuordbar sind.

7. Dachelement nach einem der Ansprüche 1 bis 6, dadurch gekennzeichnet, daß eine untere Längsseite des Dachkörpers eine Dachrinne (3) für Regenwasser, bzw. eine Auffangvorrichtung für Schnee umfaßt, Querseiten zu den Längsseiten ein Dachgesimms (4) umfassen und eine obere Längsseite einen Dachfirst (2) bildet.

8. Dachelement nach einem der Ansprüche 1 bis 7, dadurch gekennzeichnet, daß das Giebeldach Dachaufbauten (5) wie Dachfenster, Kamine, Dachbalkone, Dachterassen, Dachreiter und Dachgauben umfaßt.

9. Dachelement nach einem der Ansprüche 1 bis 8, dadurch gekennzeichnet, daß das Giebeldach als ganzes von einer Auflage abnehmbar und auf eine weitere Auflage aufsetzbar ist.

10. Dachelement nach einem der Ansprüche 1 bis 9, dadurch gekennzeichnet, daß das Dach gegenüber seiner Auflage einen zwischen 0 und 80 Winkelgrade verstellbaren Neigungswinkel besitzt.

11. Dachelement nach einem der Ansprüche 1 bis 10, dadurch gekennzeichnet, daß das Wannenmaterial (10) aus einem mineralischen Werkstoff, vorzugsweise aus Leichtbeton besteht.

12. Dachelement nach einem der Ansprüche 1 bis 11, dadurch gekennzeichnet, daß die Stützwanne (21 ) zwischen jeweils zwei Dachbalken des Giebeldaches angeordnet ist, die senkrecht und / oder parallel zu den oberen und unteren Längs- und den Querseiten (4) des Dachkörpers (20) verlaufen und die Stege (22) für das Abdeckelement (1 ) bilden.

13. Dachelement nach einem der Ansprüche 1 bis 16, dadurch gekennzeichnet, daß die Kollektoreinrichtung (24) einen Reflektor (16), einen Absorber (11, 12, 13, 14) und ein durch Sonneneinstrahlung temperiertes Fluid als Wärmeabführungseinrichtung umfaßt, wobei die Wärme über an Seitenränder(14) des Dachelementes (1) angeordneten Zu- und Ableitungen nutzbar ist.

14. Dachelement nach Anspruch 13, dadurch gekennzeichnet, daß das Fluid eine durch die Sonnenwärme erwärmbare Flüssigkeit ist.

15. Dachelement nach Anspruch 13, dadurch gekennzeichnet, daß das Fluid durch Sonnenwärme erhitzte Luft ist.

16. Dachelement nach einem der Ansprüche 1 bis 15, dadurch gekennzeichnet, daß die Kollektoreinrichtung (24) in einem von einer Innenseite der Stützwanne (17), einer Unterseite des Abdeckelementes (1) und von den seitlichen Stegen (22) begrenzten Hohlraum (23) angeordnet ist.

17. Dachelement nach Anspruch 16, dadurch gekennzeichnet, daß die Innenseite der Stützwanne (21) eine wellenförmig strukturierte und mit einem reflektierendem Material beschichtete Oberfläche (16) besitzt, wobei jeweils in einem Wellental die Kollektoreinrichtung (24) angeordnet ist und ein Wellenberg den aus der Wanne (21) vorstehenden Steg (22) für das Abdeckelement (1) bildet.

18. Dachelement nach Anspruch 17, dadurch gekennzeichnet, daß die wellenförmig strukturierte Oberfläche (16) hohlspiegelartig geformte Vertiefungen mit einen Brennpunkt (11, 12, 13, 14) aufweist, dessen flächenförmige Verlängerung auf der Oberfläche die Absorbereinrichtung und die Wärmeabführungseinrichtung bildet.

19. Dachelement nach einem der Ansprüche 7 bis 18, dadurch gekennzeichnet, daß die wellenförmig strukturierte Oberfläche (16) parallel oder senkrecht zu den oberen und unteren Längsseiten des Dachkörpers (20) verlauft.

20. Dachelement nach einem der Anspruche 17 bis 19, dadurch gekennzeichnet, daß die Kollektoreinrichtung (24) zusätzlich Vakuumröhrenkollektoren mit trockener Anbindung umfaßt, mit denen in den Wellentälern zirkulierende, durch Sonnenwärme erwärmte Luft (17) einer energetischen Nutzung zugeführt werden können.

## Claims

1. A roof element, comprising
a hollow panel-shaped roof body (20), including a one-piece supporting trough (21) and at least one covering element detachably resting on said supporting trough or on ridges (22) of trough material projecting out of said trough and
at least one collector device (24) for solar energy, wherein said covering element (1) is profiled to match conventional roof surfaces at least on an outside,
characterized in that said covering element (1) is coloured and said roof body (20) defines a whole side of a gable roof.

2. The roof element according to claim 1, characterized in that the supporting trough (21) is closed by a single covering element (1).

3. The roof element according to claim 2, characterized in that the covering element (1) has a rectangular shape and a surface (1a) of at least 16 sqm or an edge length of at least 4 m respectively.

4. The roof element according to one of claims 1 to 3, characterized in that the covering element (1) consists of a weather-resistant glass or a light-transmissive plastic or ceramic material.

5. The roof element according to one of claims 1 to 4, characterized in that the covering element (1) is profiled on the outside in such a way that it has a roof-tile, slate-roof or shingle-roof type of structure (6, 7).

6. The roof element according to one of claims 1 to 5, characterized in that the outwardly facing surface (1a) of the covering element (1) can be assigned photovoltaic elements (18) for the direct conversion of solar energy into electric power.

7. The roof element according to one of claims 1 to 6, characterized in that the roof body (20) comprises on the lower longitudinal side a gutter (3) for rainwater or a snow-catching device respectively, the sides thereof arranged perpendicularly thereto forming eaves (4) and the upper longitudinal side thereof forming a roof ridge (2).

8. The roof element according to one of claims 1 to 7, characterized in that the gable roof comprises roof superstructures (5) such as roof windows, chimneys, roof balconies, roof terraces, louver turrets and roof cowls.

9. The roof element according to one of claims 1 to 8, characterized in that the gable roof can be removed as a whole from one support and placed onto another support.

10. The roof element according to one of claims 1 to 9, characterized in that the roof has with respect to its support an angle of inclination which can be adjusted between 0 and 80°.

11. The roof element according to one of claims 1 to 10, characterized in that the trough material (10) consists of a mineral substance, preferably of lightweight concrete.

12. The roof element according to one of claims 1 to 11, characterized in that the supporting trough (21) is in each case arranged between two rafters of the gable roof which run perpendicularly and/or parallel to the upper and lower longitudinal and perpendicular sides (4) of the roof body (20) and form the ridges (22) for the covering element (1).

13. The roof element according to one of claims 1 to 16, characterized in that the collector device (24) comprises a reflector (16), an absorber (11, 12, 13, 14) and a fluid temperature-controlled by solar irradiation as heat removal device, the heat being utilizable via supply and removal lines arranged at side margins (14) of the roof element (1).

14. The roof element according to claim 13, characterized in that the fluid is a liquid which can be heated by solar heat.

15. The roof element according to claim 13, characterized in that the fluid is air heated by solar heat.

16. The roof element according to one of claims 1 to 15, characterized in that the collector device (24) is arranged in a cavity (23) bounded by an inner side of the supporting trough (21), an underside of the covering element (1) and laterally by the lateral ridges (22).

17. The roof element according to claim 16, characterized in that the inner side of the supporting trough (21) has a surface (16) which is structured in a corrugated manner and is coated with reflective material, the collector device (24) being arranged in a corrugation valley and a corrugation crest forming the ridge (22) for the covering element (1) projecting out of the supporting trough (21).

18. The roof element according to claim 17, characterized in that the surface (16) structured in a corrugated manner has depressions formed in the manner of concave mirrors with a focal point (11, 12, 13, 14), the two-dimensional extension of which on the surface forms the absorber device and the heat removal device.

19. perpendicularly to the upper and lower longitudinal sides of the roof body (20).

20. The roof element according to one of claims 17 to 19, characterized in that the collector device (24) additionally comprises vacuum tube collectors with a dry connection, with which air (17) circulating in the corrugation valleys and heated by solar heat can be used for energy supply.

## Revendications

1. Elément de toiture, comprenant
un corps de toiture (20) creux et en forme de plaque qui présente un bac de soutien (21) monobloc et au moins un élément de recouvrement détachable se trouvant par dessus ou sur l'entretoise (22) constituée du matériau du bac et en saillie du bac et
au moins un dispositif collecteur (24) pour l'énergie solaire, l'élément de recouvrement (1) étant profilé au moins du côté extérieur en vue d'une adaptation aux surfaces de toiture conventionnelles,
caractérisé par le fait que l'élément de recouvrement (1) est teinté et que le corps de toiture (20) comprend respectivement une face entière d'un toiture à pignon.

2. Elément de toiture selon la revendication 1, caractérisé par le fait que le bac de soutien (21) est fermé par un seul élément de recouvrement (1).

3. Elément de toiture selon la revendication 2, caractérisé par le fait que l'élément de recouvrement (1) est de forme rectangulaire et englobe une surface (1a) d'au moins 16 m² ou présente une longueur d'arête d'au moins 4 m.

4. Elément de toiture selon une des revendications 1 à 3, caractérisé par le fait que l'élément de recouvrement (1) consiste en du verre résistant aux intempéries ou en un matériau plastique ou céramique perméable à la lumière.

5. Elément de toiture selon une des revendications 1 à 4, caractérisé par le fait que l'élément de recouvrement (1) est profilé du côté extérieur de manière à présenter une structure (6, 7) en forme de tuile, d'ardoise ou de bardeau.

6. Elément de toiture selon une des revendications 1 à 5, caractérisé par le fait que des éléments photovoltaïques (18) destinés à la transformation directe de l'énergie solaire en courant électrique soient affectés à la surface (1a) dirigée vers le côté extérieur de l'élément de recouvrement (1).

7. Elément de toiture selon une des revendications 1 à 6, caractérisé par le fait qu'un côté longitudinal inférieur du corps de toiture (20) comprend une gouttière (3) pour l'eau de pluie ou un dispositif de récupération de neige, que les côtés perpendiculaires aux côtés longitudinaux comprennent une corniche de couronnement (4) et qu'un côté longitudinal supérieur forme un faîte (2).

8. Elément de toiture selon une des revendications 1 à 7, caractérisé par le fait que le toiture à pignon comprend des aménagements de toiture (5) tels que des lucarnes, des cheminées, des balcons, des terrasses, des tourelles et des chiens-assis.

9. Elément de toiture selon une des revendications 1 à 8, caractérisé par le fait que le toiture à pignon peut être retiré d'une seule pièce d'un support et qu'il peut être déposé sur un autre support.

10. Elément de toiture selon une des revendications 1 à 9, caractérisé par le fait que le toiture possède un angle d'inclinaison réglable entre 0 et 80 degrés par rapport à son support.

11. Elément de toiture selon une des revendications 1 à 10, caractérisé par le fait que le matériau du bac (10) consiste en un matériau minéral, de préférence en béton léger.

12. Elément de toiture selon une des revendications 1 à 11, caractérisé par le fait que le bac de soutien (21) se trouve entre respectivement deux entraits du toiture à pignon qui sont perpendiculaires et/ou parallèles aux côtés longitudinaux et transversaux (4) supérieurs et inférieurs du corps du toiture (20) et forment les entretoises (22) pour l'élément de recouvrement (1).

13. Elément de toiture selon une des revendications 1 à 16, caractérisé par le fait que le dispositif à collecteur (24) comprend un réflecteur (16), un absorbeur (11, 12, 13, 14) et un fluide tempéré par le rayonnement du soleil comme dispositif d'évacuation de la chaleur, la chaleur pouvant être utilisée par les conduites d'arrivée et d'évacuation disposées sur les bords (14) de l'élément de toiture (1).

14. Elément de toiture selon la revendication 13, caractérisé par le fait que le fluide est un liquide pouvant être réchauffé par la chaleur du soleil.

15. Elément de toiture selon la revendication 13, caractérisé par le fait que le fluide est de l'air réchauffé par la chaleur du soleil.

16. Elément de toiture selon une des revendications 1 à 15, caractérisé par le fait que le dispositif à collecteur (24) se trouve dans un espace creux (23) limité par un côté intérieur du bac de soutien (21), un côté inférieur de l'élément de recouvrement (1) et par les entretoises latérales (22).

17. Elément de toiture selon la revendication 16, caractérisé par le fait que le côté intérieur du bac de soutien (21) possède une surface (16) à structure ondulée et revêtue d'un matériau réfléchissant, le dispositif collecteur (24) se trouvant respectivement dans le creux d'une ondulation et un bombement d'ondulation forme l'entretoise (22) en saillie du bac (21) pour l'élément de recouvrement (1).

18. Elément de toiture selon la revendication 17, caractérisé par le fait que la surface (16) structurée en forme d'ondulation présente des renfoncements en forme de réflecteur de concentration avec une focale (11, 12, 13, 14) dont la prolongation planiforme en surface forme le dispositif absorbeur et le dispositif d'évacuation de la chaleur.

19. Elément de toiture selon une des revendications 7 à 18, caractérisé par le fait que la surface (16) à structure en forme d'ondulation est parallèle ou perpendiculaire aux côtés longitudinaux supérieurs et inférieurs du corps du toiture (20).

20. Elément de toiture selon une des revendications 17 à 19, caractérisé par le fait que le dispositif collecteur (24) comprend en plus des collecteurs tubulaires à vide à rattachement sec avec lesquels une exploitation énergique peut être alimentée dans l'air (17) réchauffé par la chaleur du soleil et circulant aux creux des ondulations.
